# EUROPEAN PATENT SPECIFICATION

(11) **EP 0 650 405 B1**
(45) Date of publication and mention of the grant of the patent: **08.03.2000**
(21) Application number: 93917084.1
(22) Date of filing: 09.07.1993
(51) Int. Cl.: B25J 1/00

(54) **PORTABLE, EXTENDIBLE AND RETRACTABLE DEVICE**
TRAGBARE, AUSFAHRBARE UND ZUSAMMENSCHIEBBARE BEWEGUNGSVORRICHTUNG
DISPOSITIF PORTABLE, EXTENSIBLE ET RETRACTABLE

(30) Priority: 13.07.1992 US 912415
(43) Date of publication of application: 03.05.1995
(73) Proprietor: Hammer, Mordechai, 62 303 Tel Aviv (IL)
(72) Inventor: Hammer, Mordechai, 62 303 Tel Aviv (IL)
(74) Representative: Waxweiler, Jean
(86) International application number: US9306499
(87) International publication number: WO9401254

(56) References cited:
- FR-A- 1 492 931
- FR-A- 1 580 387
- FR-A- 2 369 993
- US-A- 161 010
- US-A- 326 336
- US-A- 336 414
- US-A- 925 822
- US-A- 926 642
- US-A- 1 384 761
- US-A- 2 641 401
- US-A- 3 213 574
- US-A- 3 248 831
- US-A- 3 534 867
- US-A- 3 836 011
- US-A- 4 169 338
- US-A- 4 388 033
- US-A- 4 406 375
- US-A- 4 575 976

## Description

The present invention relates to a portable extendible-retractable device. More specifically, the present invention relates to a device which is useful for efficiently extending and retracting a wide variety of tools and, more particularly, to a device made up of plurality of interacting members which can be easily extended and retracted so as to place in the desired location a tool or other instrumentality attached to the device.

It is often desirable to be able to place and cause to operate a tool or other instrumentality (hereinafter "tool") at a location which is more distant than can be comfortably be reached by extending one's arm with the tool therein. For example, when one wishes to change an incandescent light bulb located in a ceiling which is 3 meters (ten feet) tall, it is necessary to grab and rotate the light bulb. To this end one might climb on a ladder and use one's hand to replace the bulb. Alternatively, one could obviate the need to use a ladder by using a sufficiently long pole which had a tool at its end which was capable of grabbing and rotating the bulb. In this case, the operator would remain standing safely on the ground while replacing the light bulb and would carry out the operation through the use of the long pole.

While a pole as described is useful in certain application, it is not free from shortcomings. Primarily, it is known that, unlike the case of replacing a light bulb described above, in many operations the location at which the operation is to take place is not at a fixed distance from the user but varies either discretely or continually during the operation.

For example, if one wished to paint the 3 meter (ten-foot) tall walls and the ceiling of a room with paint roller, means must be at hand for locating the roller at every point on the walls and ceiling. Furthermore, the location of the roller varies instantaneously during each painting stoke, regardless of the position of the painter. One option is to use a hand-held roller and make use of a ladder of scaffolding to reach the top portions of the walls and the ceiling. Another alternative is to mount the roller on a sufficiently long pole which will allow the top portions of the walls and the ceiling to be reached with the painter remaining standing on the floor without requiring the use of a ladder.

One disadvantage of this technique is that the length of a stroke is limited by the distance though which the painter's arms can move, i.e., if the painter is able to translate the pole a distance of 0.9 meter (three feet), the paint stroke on the wall will be limited to 0.9 meter (three feet).

A further disadvantage of this technique is that the pole is of fixed length and may therefore be of limited use in other application Thus, a 1.5 meter (five foot) pole which may be useful in painting a room having 3 meters (ten-foot) high walls and ceiling, may be largely inadequate in painting a room having 4.5 meters (fifteen-foot) high walls and ceiling.

To partially overcome the latter disadvantage and to thereby increase its versatility, it is possible to form the pole from a number of detachable modules. In this way modules could be added or removed before each use so as to produce a pole with overall length which is adequate for the intended task. While the modularization of the pole overcomes certain difficulties, it remains a tedious chore to add or remove modules before each task. More importantly, once a pole of proper length has been assembled, it continues to suffers from the disadvantage described above relating to the limitation on the length of the stroke.

A possible solution is to form a pole made up of a number of interconnected members which are able to move relative to one another and thereby alternately lengthen and shorten the pole. Such a pole may use hydraulic or pneumatic means, not unlike those used in a variety of winches, for example, the system used to position a basket carrying an electrical repairman sufficiently near a transformer as to allow the repairman to work on the transformer. However, such systems are heavy and mechanically complicated and are thus not suitable for a simple hand-held pole for use in properly locating a relatively light tool.

There is thus a widely recognized need for, and it would be highly advantageous to have, an extendible-retractable device which can be actively and positively extended and retracted, as desired by the user, with the device oriented at any angle, to which a tool could be attached and which could be easily used to rapidly vary the length of the pole during the performance of a particular task.

FR-A-1 492 931 describes a telescopic boom crane constituted by a number of tubular elements with the outer member forming the boom casing which is pivotally mounted on the frame of the crane. In FR-A-1 492 931, the boom has two endless chains or cables in order to drive two movable members. The first endless chain is attached to the second member and the second endless chain is attached to the first and third members.

Other examples of telescoping devices or extensible booms are shown and described in US-A-3 248 831, US-A-4 169 338, FR-A-2 369 993, and US-A-3 836 011.

In the closest prior art US-A-3 213 574 there is disclosed a portable extendible-retractable device according to the preamble of claim 1 or 21, which is adapted to be held by hand and is suitable for motion of a tool or other object attached to the device.

It is a primary objective to the present invention to provide a portable extendible-retractable device which overcomes the aforementioned problems associated with the prior art arrangements, and which can be actively and positively extended and retracted, as desired by the user, with the device held by hand and oriented at any angle, and which can be easily used to rapidly vary the length of the pole either discretely or continually during the performance of a particular task.

According to the two aspects of the invention, the portable extendible-retractable device of the invention comprises the features claimed in claim 1 or 21.

According to a preferred embodiment of the invention, the flexible connector means comprises first and second flexible connectors, or forms a continuous band.

Also according to a specific embodiment of the present invention there is provided a extendible-retractable device, comprising: (a) a first member; (b) a second member, the first member being movable relative to the second member; (c) a third member, the third member being movable relative to the first and second member; (d) a flexible connector mounted at the second member, the flexible connector being connected to the first member and to the third member such that the first and third members move together in opposite directions relative to the second member.

According to a further embodiment of the invention described below, there is further provided: (e) a third member movable relative to the first member and the second member; (f) a third flexible connector attached to a posterior portion of the third member, the third flexible connector being constrained by and being movable relative to a first location of the second member, the third flexible connector being attached to a first attachment location of the first member so that anteriorly-directed motion of the second member results in anteriorly-directed motion of the third member; and (g) a fourth flexible connector attached to a posterior portion of the third member, the fourth flexible connector being constrained by and being movable relative to a second location of the second member, the second location being posterior of the first location, the fourth flexible connector being attached to a second attachment location of the first member so that posteriorly-directed motion of the second member results in posteriorly-directed motion of the third member.

According to a preferred embodiment, the members are nested together and are approximately cylindrical in shape, although the members may not be nested but rather may be arranged next to each other.

According to a further embodiment, attached to the farthest member is a suitable tool which may be, among many other possibilities, a paint brush, a paint roller, a mop, a dust brush, a cutting tool, a tongs, or a fitting capable of attaching the device to another body.

According to another embodiment according to the present invention there is provided an extendible-retractable device, comprising: (a) a first member formed with a longitudinal slot; (b) a second member movable relative to the first member; (c) a rigid connector attached to a posterior portion of the second member, the rigid connector being slidable through the longitudinal slot of the first member so that the second member is moved whenever the rigid connector is moved; (d) a third member movable relative to the first member and the second member; (e) a third flexible connector attached to a posterior portion of the third member, the third flexible connector being constrained by and being movable relative to a first location of the second member, the third flexible connector being attached to a first attachment location of the first member so that anteriorly-directed motion of the second member results in anteriorly-directed motion of the third member; and (f) a fourth flexible connector attached to a posterior portion of the third member, the fourth flexible connector being constrained by and being movable relative to a second location of the second member, the second location being posterior of the first location, the fourth flexible connector being attached to a second attachment location of the first member so that posteriorly-directed motion of the second member results in posteriorly-directed motion of the third member.

According to yet another embodiment according to the present invention there is provided an extendible-retractable device, comprising: (a) a first member formed with a longitudinal slot and having a second rack; (b) a second member movable relative to the first member and having a first pinion near its anterior end and a second pinion near its posterior end, the second pinion engaged to the second rack; (c) a rigid connector attached to a posterior portion of the second member, the rigid connector being slidable through the longitudinal slot of the first member so that the second member is moved whenever the rigid connector is moved; (d) a third member movable relative to the first member and the second member, the third member having a first rack engaged to the first pinion, the pinion being rotatable by a cable which is attached to the first member so that anteriorly-directed motion of the second member results is anteriorly-directed motion of the third member, the third member being attached to a second pinion cable for rotating the second pinion, so that posteriorly-directed motion of the second member results is posteriorly-directed motion of the third member.

The present invention successfully addresses the shortcomings of the presently known configurations by providing an extendible-retractable device on which can be mounted a suitable tool which can be used to continually change the position of the tool so as to facilitate carrying out the task.

### BRIEF DESCRIPTION OF THE DRAWINGS

The invention is herein described, by way of example only, with reference to the accompanying drawings, wherein:
FIG. 1 is a device made up of three members;
FIG. 2 is another device made up of two members and featuring a detachable handle;
FIG. 3 is yet another device made up of two members and featuring a rigid connector;
FIG. 4 is a device made up of three members which are arranged next to each other rather than inside one another as in Figure 1;
FIG. 5 is still another embodiment of a device according to the present invention featuring three members, a rigid connector and rack-and-pinion mechanisms;
FIG. 6 is a variation of the embodiment of Figure 5 featuring a motor, a gear wheel and a notched bar;
FIG. 7 is an embodiment similar to that of Figure 1 but with a motor for moving the second member;
FIG. 8 is an alternative embodiment including detachable extension members;
FIG. 9 is another alternative embodiment featuring a single toothed wheel;
FIG. 10 is an embodiment similar to that of Figure 9 but featuring a pair of connected toothed wheels;
FIG. 11 shows another embodiment according to the present invention;
FIG. 12 shows a magnified section of the embodiment of Figure 11 and further shows a flexible connecting member;
FIG. 13 shows a typical device according to the present invention with a selection of tools for attachment to the device;
FIGS. 14A and 14B show a device according to the present invention in use for painting a vertical wall;
FIG. 15A and 15B show a device according to the present invention in use for sweeping a floor;
FIG. 16 shows a number of interlinked devices according to the present invention;
FIG. 17A and 17B show a number of interlinked devices according to the present invention when used to create a support structure of suitable dimensions;
FIG. 18A and 18B illustrate two tripods incorporating devices according to the present invention;
FIG. 19A and 19B illustrate two more tripods incorporating devices according to the present invention;
FIG. 20A, 20B and 20C illustrates three additional applications of a device according to the present invention using an electrical shocker.

### DESCRIPTION OF THE PREFERRED EMBODIMENTS

The present invention is of a device which can be used to continually change the position of a tool during the operation of the tool. Specifically, the present invention can be used to conveniently and rapidly carry out a large variety of tasks which would otherwise require careful preparation and/or the use of ladders and similar devices. For example, a device according to the present invention can be used to quickly and safely paint entire walls and ceilings while standing on the floor. It can be used to replace light bulbs in the ceiling without having to climb on a ladder or touch the bulb. It can be used to take down a book or a grocery store item located on a high shelf without use of a chair or a ladder.

The principles and operation of an extendible-retractable device according to the present invention may be better understood with reference to the drawings and the accompanying description.

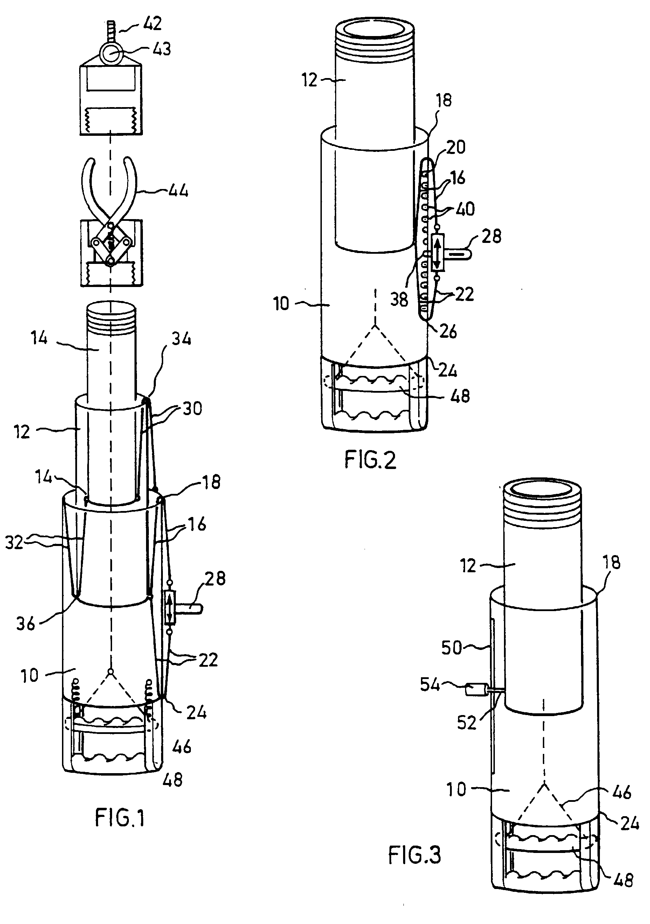

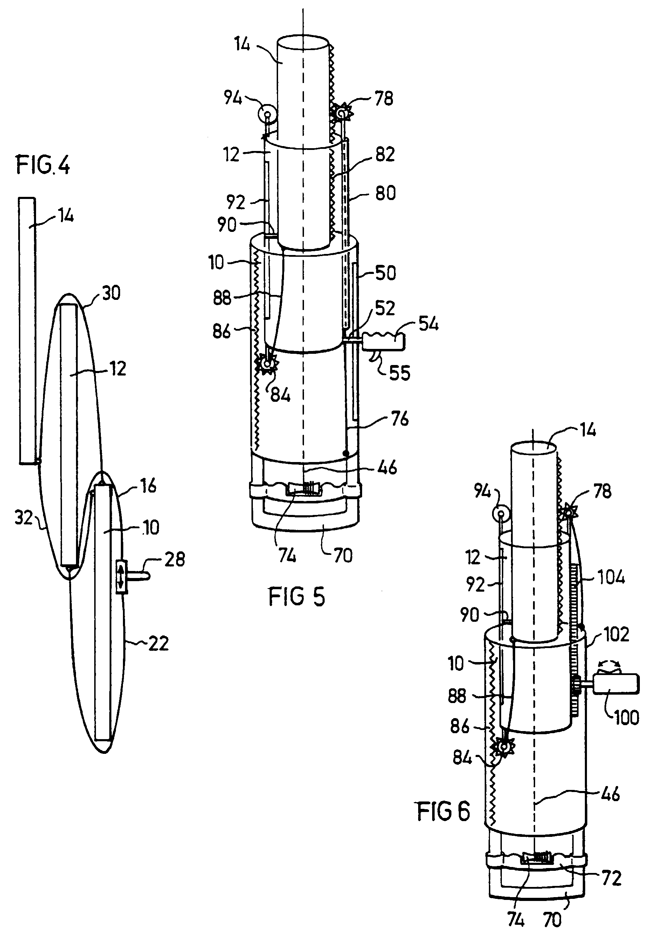

Referring now to the drawing, Figures 1 and 2 illustrate two related embodiments of the present invention. The device illustrated includes three members - a first member **10**, a second member **12** and a third member **14**. The three members are sized and shaped so as that third member **14** fits inside second member **12** which, in turn, fits inside first member **10**. Second member **12** and third member **14** are movable parallel to each other and relative to first member **10**. The members shown are cylindrical in shape, but any other suitable shape may be used. For example, a system according to the present invention may include a member of square cross section nested within a member of circular cross section. This facilitates the prevention of rotation of one member relative to another. In certain applications, however, it may be desirable to have one member rotate relative to another, either automatically as part of the extension or retraction process (e.g. with the aid of a spiral protrusion on the outside surface of an inner member) or independently controlled by the user. It is not essential that the three members be nested inside each other as will be discussed below in the context of Figure 4.

A first flexible connector **16**, which is preferably a suitable cable, is attached to second member **12**, preferably at its posterior portion, most preferably at its posterior edge. The attachment is preferably permanent. First flexible connector **16** then runs from its point of attachment to second member **12** to the adjoining anterior edge **18** of first member **10**. It is preferable to include a small pulley wheel (not shown) permanently attached to first member **10** at anterior edge **18** to facilitate movement of first flexible connector **16** and prevent friction and wear of first flexible connector **16**. From there, first flexible connector **16** runs posteriorly along the wall of first member **10**. Rather than passing over the anterior edge **18** of first member **10**, first flexible connector **16** may be made to pass through a first hole **20** (Figure 2), preferably located near the anterior edge **18** of first member **10**, which may, itself include a friction-reducing pulley. In either case, first flexible connector **16** is made to pass through a fixed point on first member **10**, preferably located at or near anterior edge **18** of first member **10**.

A second flexible connector **22**, which is preferably a suitable cable, is also attached to second member **12**, preferably at its posterior portion, most preferably at its posterior edge. The attachment is preferably permanent. Second flexible connector **22** then runs from its point of attachment to second member **12** to the adjoining posterior edge **24** of first member **10**. It is preferable to include a small pulley wheel (not shown) permanently attached to first member **10** at posterior edge **24** to facilitate movement of second flexible connector **22** and prevent friction and wear of second flexible connector **22**. From there, second flexible connector **22** runs anteriorly along the wall of first member **10**. Rather than passing under the posterior edge **24** of first member **10**, second flexible connector **24** may be made to pass through a second hole **26** (Figure 2), which is posterior of first hole **20** and which is preferably located near the posterior edge **24** of first member **10**, which may, itself include a friction-reducing pulley. In either case, second flexible connector **24** is made to pass through a fixed point on first member **10**, preferably located at or near posterior edge **24** of first member **10**.

The end of first flexible connector **16** and the end of second flexible connector **22** which are not connected to second member **12** are coupled to each other either directly or indirectly. When coupled directly to each other the two flexible connectors in form, in effect, a single flexible connector. Operation of the device in this case is by alternatively pulling the joined flexible connector anteriorly and posteriorly. Rather than joining the ends of the two flexible connectors, it is clear that it is possible to use a single flexible connector from the start and thereby obviate the need to attach to each other two connectors. Similarly, it is clear that two flexible connectors attached to second member **12** may alternatively be a single connector which is attached to second member **12**.

Alternatively, the two ends of flexible connectors **16** and **22** are each attached to opposite ends of a handle **28**. Alternatively, a handle **28** may be mounted onto and fixedly connected to a single flexible connector. Flexible connectors **16** and **22** are sufficiently taut that longitudinal motion of handle **28** translates into longitudinal motion in the opposite direction of second member **12**. To facilitate use of the device it may be desirable to include a secondary handle (not shown) fixedly connected to first member **10**. This secondary handle, which may extend posteriorly from first member **10**, or which may form the posterior portion of first member **10**, would be intended as a place for the user's other hand, i.e., the hand not used to operate handle **28**, to firmly grasp the device and help create the relative motion between handle **28** and first member **10**.

Handle **28** may be of any suitable design. In the embodiment of Figure 1, handle **28** hangs on the side of first member **10**. In a preferred embodiment shown in Figure 2, handle **28** is equipped with means for attaching handle **28** to first member **10**. Such means may take the form of a protrusion **38** in the surface of handle **28** facing first member **10**. Protrusion **38** is sized and shaped so as to fit within one or a series of depressions **40** in the side of first member **10**. This mechanism makes it possible to fix the position of handle **28** once the desired extension or retraction has been achieved, and prevents the extent of the extension or retraction from accidentally changing.

In an alternative embodiment according to the present invention, handle **28** is replaced by a winch mechanism (not shown) which is permanently attached to first member **10**. Rather than pulling handle **28** anteriorly or posteriorly, the winch is turned to accomplish the same goal. The winch may further include means, such as ratchet mechanism, for locking the winch in a particular position so as to prevent the members from moving relative to each other.

In the preferred embodiment of Figure 1, third member **14** is connected to first member **10** through a third flexible connector **30** and a fourth flexible connector **32**.

Third flexible connector **30**, which is preferably a suitable cable, is attached to third member **14**, preferably at its posterior portion, most preferably at its posterior edge. The attachment is preferably permanent. Third flexible connector **30** then runs from its point of attachment to third member **14** to the adjoining anterior edge **34** of second member **12**. It is preferable to include a small pulley wheel (not shown) permanently attached to second member **12** at anterior edge **34** to facilitate movement of third flexible connector **30** and prevent friction and wear of third flexible connector **30**. From there, third flexible connector **30** runs posteriorly along the wall of second member **12**. Rather than passing over the anterior edge **34** of second member **12**, third flexible connector **30** may be made to pass through a third hole (not shown), preferably located near the anterior edge **34** of second member **12**. In either case, third flexible connector **30** is made to pass through a fixed point on second member **12**, preferably located at or near anterior edge **34** of second member **12**. The end of third flexible connector **30** is attached to a fixed point, preferably at or near the anterior edge of first member **10**, and preferably permanently, in such a way that third flexible connector **30** is always taut so that anteriorly-directed motion of second member **12** results in anteriorly-directed motion of third member **14**.

A fourth flexible connector **32**, which is preferably a suitable cable, is also attached to third member **14**, preferably at its posterior portion, most preferably at its posterior edge. The attachment is preferably permanent. Forth flexible connector **32** then runs from its point of attachment to third member **14** to the adjoining posterior edge **36** of second member **12**. It is preferable to include a small pulley wheel (not shown) permanently attached to second member **12** at posterior edge **36** to facilitate movement of fourth flexible connector **32** and prevent friction and wear of fourth flexible connector **32**. From there, fourth flexible connector **32** runs anteriorly along the wall of second member **12**. Rather than passing under the posterior edge **36** of second member **12**, fourth flexible connector **32** may be made to pass through a fourth hole (not shown), which is posterior of third hole described above and which is preferably located near the posterior edge **36** of second member **12**. The end of fourth flexible connector **32** is attached to a fixed point, preferably at or near the anterior edge of first member **10**, and preferably permanently, in such a way that fourth flexible connector **32** is always taut so that anteriorly-directed motion of second member **12** results in anteriorly-directed motion of third member **14**. Preferably, third flexible connector **30** and fourth flexible connector **32** are connected to third member **14** at opposing points along its circumference. Similarly, third flexible connector **30** and fourth flexible connector **32** are preferably connected to first member **10** at opposing points along its circumference. Such placement of the attachment points serves to centralize third member **14** and reduce its tendency to engage the walls of second member **12** and produce undesirable frictional forces which tend to impede relative motion of the members. The centralization thus serves to facilitate the extension and retraction of the device. Toward the same ends, it may be preferable to include a number of connected or independent third flexible connectors **30** and/or a number of connected or independent fourth flexible connectors **32** disposed around the periphery of third member **14** to further centralize third member **14**. Along the same lines, it may be preferable to utilize a number of connected or independent first flexible connectors **16** and/or a number of connected or independent second flexible connectors **22** disposed around the periphery of first member **10** to further stabilize and centralize second member **12**.

A device according to the present invention may be used to carry a tool and place it where the user desires as the task being performed progresses. The variety of tools which can be used in conjunction with a extendible-retractable device according to the present invention is almost limitless. For convenience, they can be classified into passive tools, automatically activated tools, and independently activated tools. In each case, the tool is preferably connected, most preferably detachably, to the furthest member of the device.

Passive tools include those tools which need merely be connected to the furthest member. In this category fall tools such as a paint brush, a paint roller, a mop, a dust brush, a stationary cuffing tool, such as a knife. Also included in this category are various fittings which make it possible to connect the device to another body. For example, the tool could be used as a tripod to support a camera, or as a support for an antenna, or as a bolt onto which a shading member can be screwed to form a beach umbrella. Similarly, the fitting **42** may be such as to make possible the attachment of a second extendible-retractable device, as through an engageable opening **43**, which would make it possible to quickly build rigid structures such as a tent.

Automatically activated tools are those which would be activated and deactivated by the very extension or retraction of the extendible-retractable device. For example, in picking fruits which are all at approximately the same height from the ground, it may be desirable to use a clipper which closes and cuts whenever the extendible-retractable device is extended.

Finally, independently activated tools are those which can be activated or operated by the user independently of the current extension or retraction status of the device. Examples might be various cutting tools, shears, scissors, and tongs **44** used to pick up and release various objects. To operate such tools means would be provided to transmit an independent action by the user to the tool. One such means might be a coaxial cable configuration, such as is used in braking systems for bicycles. Sufficient coaxial cable **46** would be wound on a roller so that the cable could be automatically lengthened and shortened as the device is lengthened and shortened. The coaxial construction of the cable, with the inner cable being able to move relative to the outside tube, would allow the user to operate the tool regardless of the precise extension or retraction status of the device. To operate the tool, the user would move an operating handle **48**.

Handle **48** may be of any suitable construction. One example of handle **48** is shown in Figure 5 wherein handle frame **70** is rigidly mounted to first member **10**. Handle bar **72** is slidably mounted onto handle frame **70** so that the user can pull handle bar **72** toward handle frame **70** whenever it is desired to activate, for example, tongs **44**. Preferably, handle bar **72** is biased, as by a spring (not shown) to a position away from handle frame **70**. Onto handle bar **72** is mounted a spool **74** onto which is wound an appropriate length of cable **46** to accommodate the varying lengths of the device in various states of extension and retraction.

Another alternative configuration is shown in Figure 3. Here first member **10** features a longitudinal slot **50**. A rigid connector **52** is attached to a posterior portion of second member **12**. Rigid connector **52** is slidable through longitudinal slot **50** so that second member **12** is moved whenever rigid connector **52** is moved. Rigid connector **52** may be attached to or may include a handle element **54** which is found outside of first member **10**. To extend or retract the device, the user would move handle element **54** anteriorly or posteriorly, respectively. Such a mechanism replaces first flexible connector **16** and second flexible connector **22**. The interconnections represented by third flexible connector **30** and fourth flexible connector **32** are as described above in the context of the previously discussed embodiments.

Yet another alternative embodiment of a device according to the present invention is shown in Figure 4. The device is related to that shown in Figure 1, except that rather than the three members being nested inside one another, the three members of Figure 4 are arranged along side of each other. Such a configuration may be useful, for example, in opening and closing slats of window blinds of various types. The slats may move through tracks or may be suspended.

Still another alternative configuration is shown in Figure 5. Here, as in the embodiment shown in Figure 3, first member **10** features a longitudinal slot **50**. A rigid connector **52** is attached to a posterior portion of second member **12**. Rigid connector **52** is slidable through longitudinal slot **50** so that second member **12** is moved whenever rigid connector **52** is moved. Rigid connector **52** may be attached to or may include a handle element **54** which is found outside of first member **10**. To extend or retract the device, the user moves handle element **54** anteriorly or posteriorly, respectively. Handle element **54** may include handle stopper **55** which can be inserted into longitudinal slot **50** whenever it is desired to immobile handle element **54** so as to maintain a certain degree of extension or retraction of the device.

Attached to first member **10** is a first pinion cable **76** which is attached to a take-up spool (not shown) which is connected to, and is capable of rotating, a first pinion **78**. First pinion **78** is mounted onto second member **12**, preferably near its anterior end. To reduce abrasion of first pinion cable **76,** a tube **80** is preferably provided which is attached to second member **12** and through which first pinion cable **76** is able to move.

Mounted onto third member **14** opposite first pinion **78** is first rack **82** which engages first pinion **78**. Whenever it is desired to extend the device, handle element **54** is pushed anteriorly, thereby forcing second element **12** anteriorly. Since one end of first pinion cable **76** is fixed to first member **10**, the anterior motion of second member **12** causes first pinion **78** to rotate clockwise. Since the gears of first pinion **78** are engaged with first rack **82**, the rotation of first pinion **78** brings about the anterior displacement of third element **14**.

To effect the retraction of the device, second member **12** is equipped with a second pinion **84**, preferably at its posterior end, which engages second rack **86** mounted onto the interior surface of first member **10**. A second pinion cable **88** is attached to second pinion **84** so as to be able to rotate it, and is attached at its other end to third member **14**.

Whenever it is desired to refract the device, handle element **54** is pushed posteriorly, thereby forcing second element **12** posteriorly. The posterior motion of second member **12** causes second pinion **84** to rotate as it steps down along second rack **86**. This rotation serves to take up second pinion cable **88** and thereby to displace third member **14** posteriorly.

Preferably, a device according to this embodiment further includes means for preventing the rotation of third member **14** relative to second member **12**. This means may take the form of a pin **90** which is attached to third member **14** and which is capable of sliding only along anti-rotation slot **92**. Second member **12** is prevented from rotating relative to first member **10** in similar fashion through the constraint offered by longitudinal slot **50** to the movement of rigid connector **52**. Eliminating the rotation of the members relative to one another ensures that the rack-and-pinions are properly engaged at all times.

To help centralize third member **14**, second member **12** is preferably equipped with a centralizing wheel **94** which tends to keep third member **14** centralized and ensures proper engagement of first pinion **78** with first rack **82**.

In each of the described embodiments it may be desirable to add one or more springs (not shown) which will tend to facilitate and expedite the extension (or the retraction) of the outlying members. When retracting (or extending) such a device, sufficient additional force would have to applied to overcome the opposing force of the springs.

An embodiment which resembles that shown in Figure 5 is shown in Figure 6, the major difference between the two being the presence of a suitable motor **100** which serves to rotate a gear wheel **102** in either sense. Gear wheel **102** engages a notched bar **104** attached to second member **12** so that rotation of gear wheel **102** is effective in raising or lowering second member **12**.

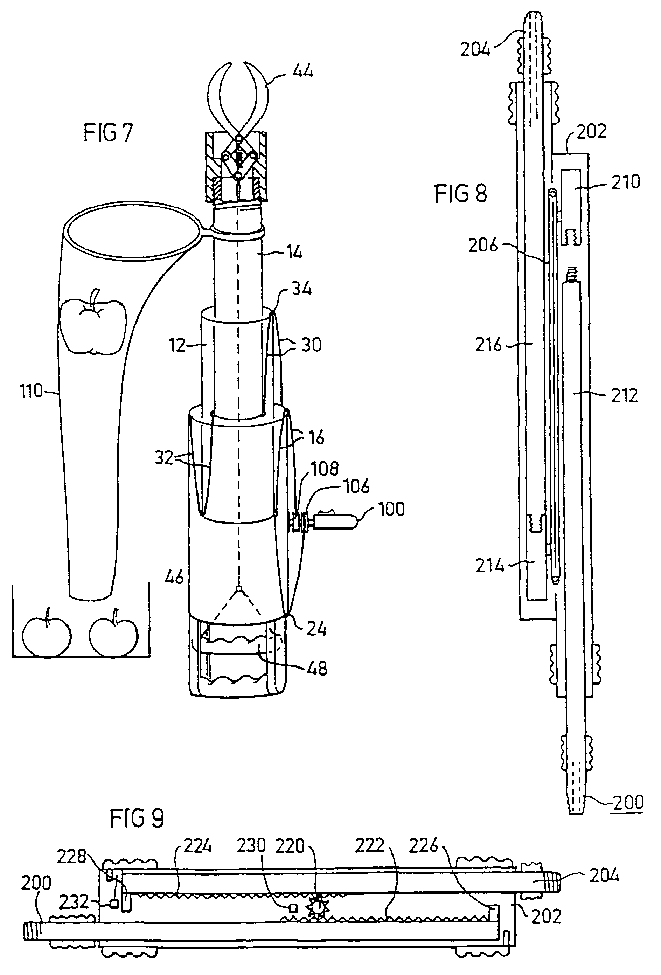

Figure 7 shows an embodiment similar to that shown in Figure 1 but including a motor **100** as in Figure 6 which serves to rotate a pair of wheels **106** and **108** in either sense. The rotation of wheels **106** and **108** serves to simultaneously take in and let out first flexible connectors **16** so as to move second member **12** in the way described above with respect to Figure 1. Also shown in Figure 7 is a modification which includes a catch bag **110** which allows the device, with a proper tongs **44** or scissors-type attachment, to be used in the picking and gathering of fruits from a tree.

Shown in Figure 8 is another embodiment according to the present invention. The embodiment includes a first member **200**, a second member **202** and a third member **204**. The operating principle is similar to that in the embodiments described above but the means for implementing the principle differ somewhat, as described below. In this and subsequently described configurations the flexible members, if any, are all internal to the device which prevents the flexible members, when present, from getting dirty or worn.

First member **200** and third member **204** are each slidable within second member **202**. Mounted in second member **202** is a continuous band **206** which is attached to both first member **200** and to third member **204**. When first member **200** is pulled downward, continuous band **206** is forced to rotate clockwise, thereby pulling third member **204** upwards, and vice versa.

Also shown in Figure 8 is a modification whereby first member **200** is made up of two detachable sections -- an anchoring section **210** which is attached to continuous band **206**, and a replaceable section **212** which can be screwed into, or otherwise detachably connected to, anchoring section **210**. A similar arrangement is shown for third member **204** which is made up of anchoring section **214** and replaceable section **216**. This arrangement makes it possible to readily lengthen or shorten the two members and/or replace them with members having particularly suitable properties, as desired, for a particular application.

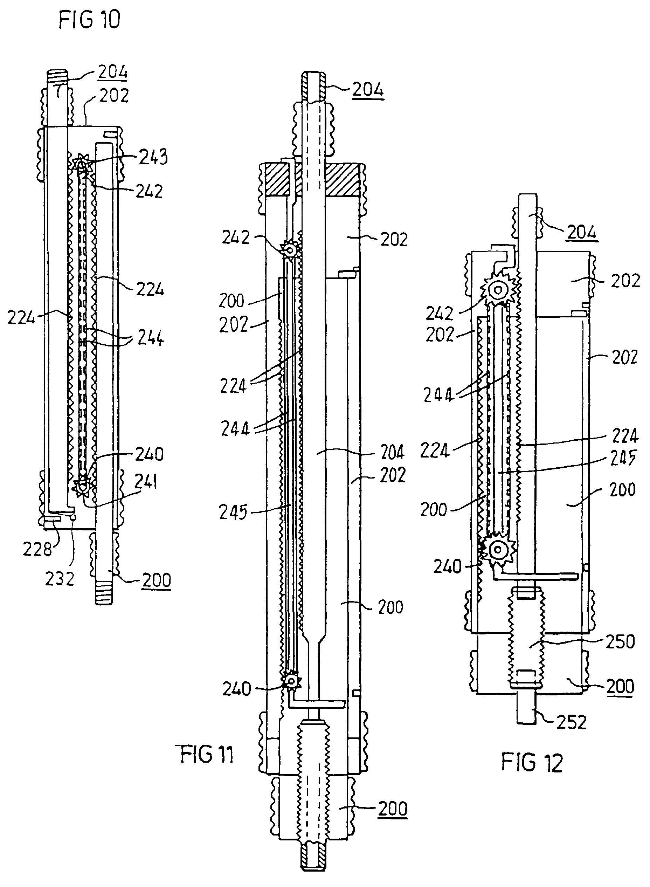

Figure 9 shows an embodiment which is similar to that of Figure 8 but wherein the continuous band is replaced by a toothed wheel **220** which engages toothed bars **222** and **224** connected to first member **200** and to third member **204**, respectively. Stops **226** and **228** ensure that neither of the moveable members is able to be pulled completely out from second member **202**. Figure 9 also shows the possibility of using sensors **230** and **232** detect the position of the moving parts of the device and could be used in a variety of ways. For example, in applications where it is desired to periodically extend and retract third member **204** to produce a series of strokes, as in painting, the sensor could be used to detect the end of a stroke and to actuate a motor to change the direction of third member **204**.

A variation of the embodiment of Figure 9 is shown in Figure 10.

In this embodiment, two toothed wheels 240 and 242 are mounted onto second member 202 and are connected by continuous band 244 which makes it possible to extend third member 204 approximately twice as far as is possible with the embodiment of Figure 9. Band 244 is looped over two small wheels 241 and 243 that are co-axially mounted to toothed wheels 240 and 242, correspondingly. Optionally, wheels 241 and 243 may be toothed (not shown). When the smaller wheel 241 rotates, the larger wheel 240 is thus driven with similar rotation, and vice versa. The same applies to wheels 243 and 242, respectively. When first member 200 is moved posteriorly with respect to second member 202, toothed wheel 240 rotates clockwise along rack 224, which is attached to first member 200, and induces the rotation of wheel 241 which draws band 244. Band 244 rotates wheel 243 clockwise, which is rotated together with wheel 242. Wheel 242 produces the anterior motion of third member 204, through rack 224, which is attached to third member 204. The description of movements of members 200 and 204 in different directions is analogous.

Yet another configuration is illustrated in Figures 11 and 12 which somewhat resembles the embodiment of Figure 10. In this embodiment, the movement of first member 200 downward causes toothed wheel 240 to rotate counterclockwise. Since toothed wheels 240 and 242 are mounted onto bar 245 which is rigidly connected to second member 202 and are connected by continuous band 244, the rotation of wheel 240 brings about the counterclockwise rotation of wheel 242 whose teeth interact with third member 204 causing it to extend out of second member 202. The use of wheels 240 and 242 may be doubled so as to engage flexible connector 244, as well as racks 224.

Figure 12 shows a close-up view of one section of the device of Figure 11 wherein third member 204 is hollow so as to be able to accommodate the flow of fluids, such as water, through the device. The device further includes a flexible, bellows-like hollow tube 250 which flexibly connects third member 204 with the inlet 252 through which fluid is introduced to the system. In this way, inlet 252 can be fixed to first member 200 yet third member 204 can be caused to extend away from second member 202 without losing hydraulic communication with inlet 252. Such a configuration is useful, for example, for use with vacuum cleaners and spray painting devices.

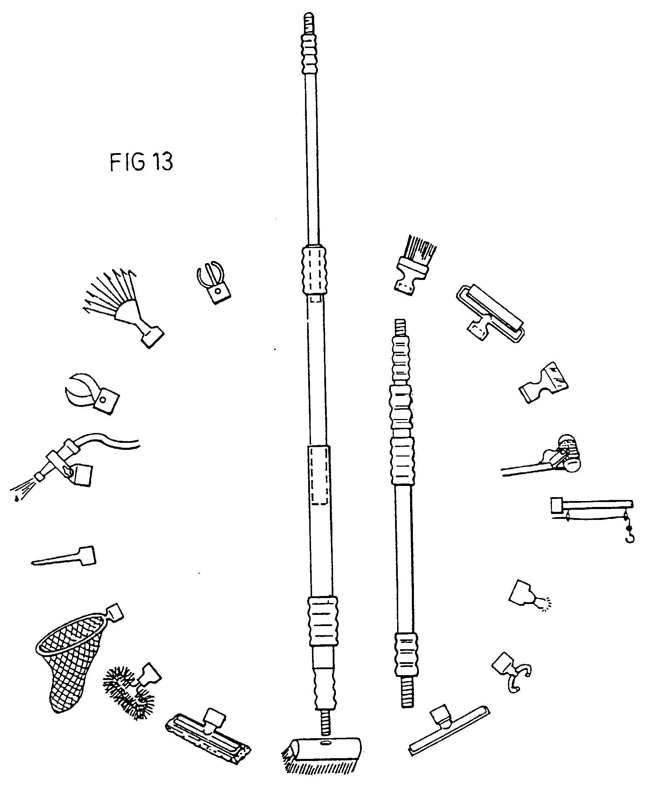

As mentioned above, a device according to the present invention may be used with any one of a large variety of tools connected to one or both of its ends. Some examples of such tools are shown in Figure 13.

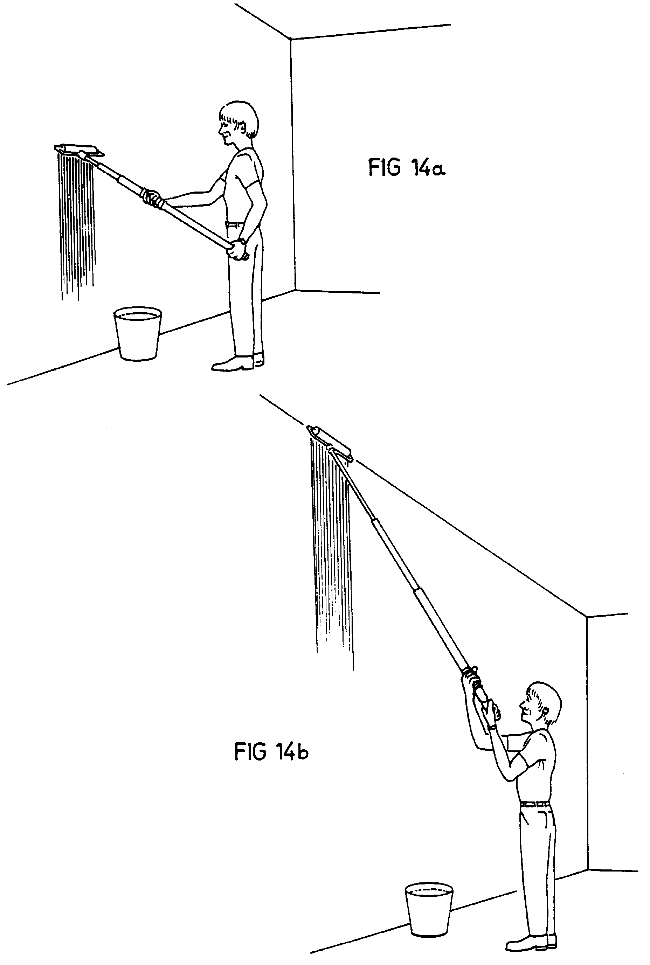

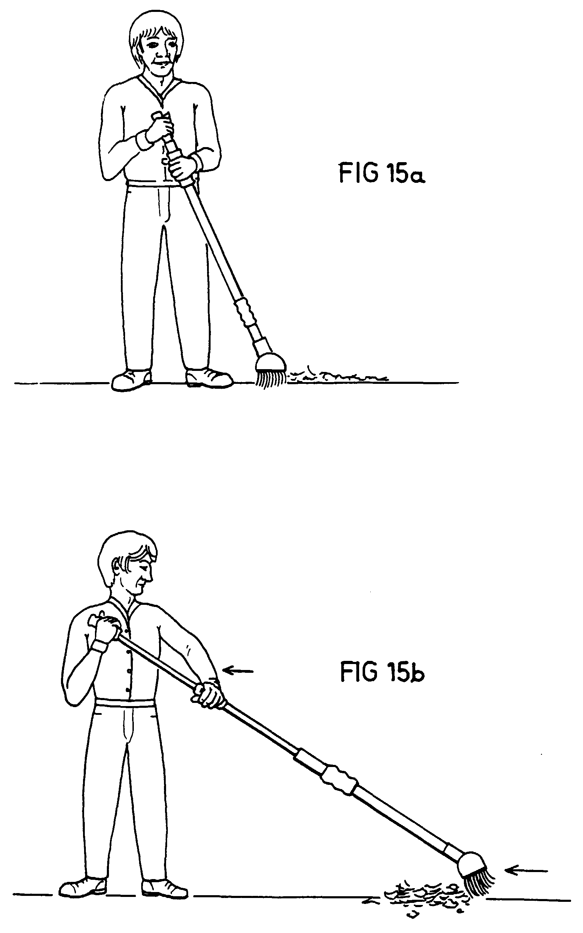

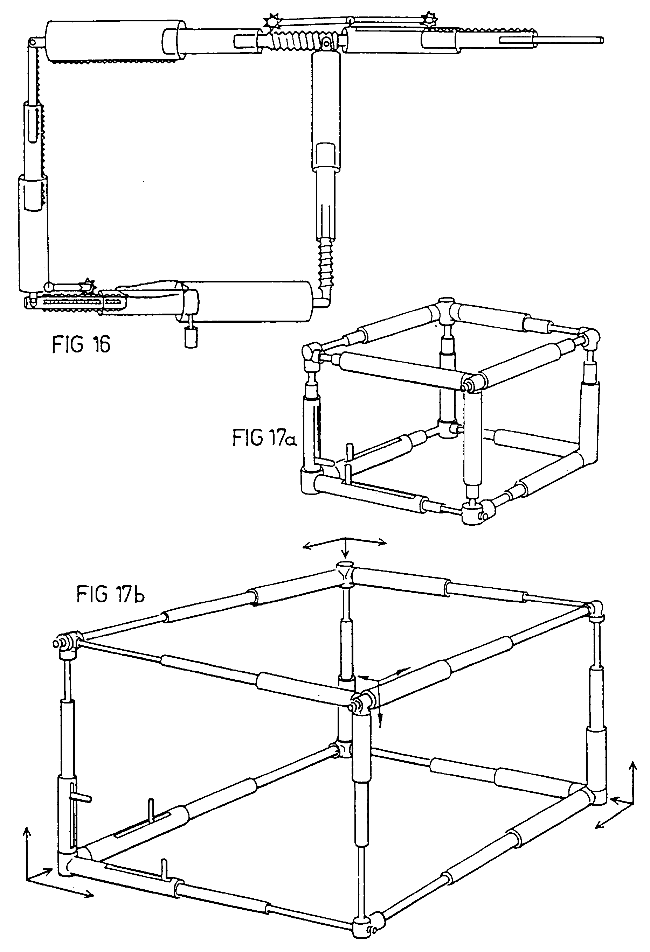

Shown in Figures 14 and 15 are views of a device according to the present invention as it might appear in applications involving the painting of a wall (Figures 14a and 14b) and sweeping a floor (Figures 15a and 15b). Shown in Figure 16 are four devices according to the present invention which have been interlinked so that the extension of one unit causes the extension of the others. Illustrated in Figure 16 are four units which are rigidly connected to each other. Each pair of adjoining units are further connected in that the outward motion of the third member of one device brings about the extension of the adjoining device. One way of accomplishing this is illustrated with regard to the pair of devices at the left and top of Figure 16.

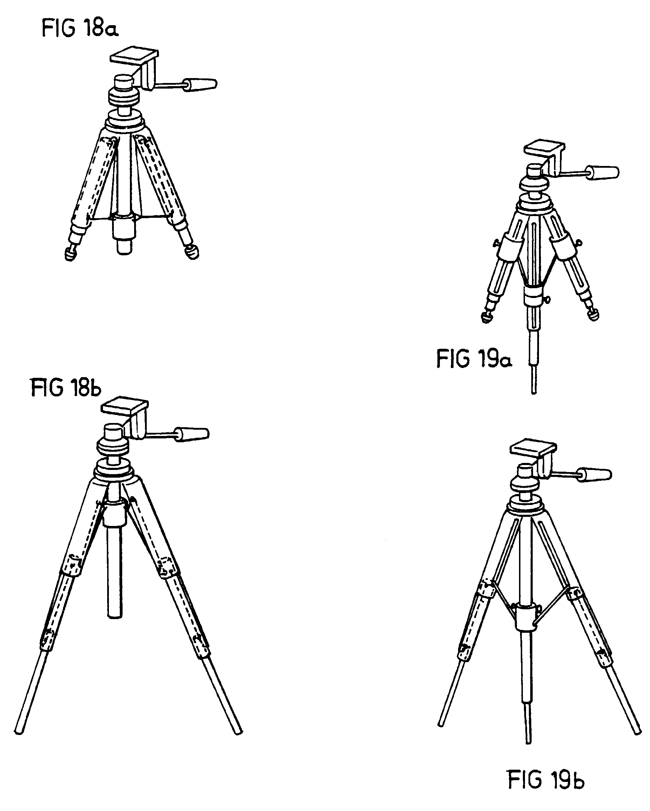

Another application, which is based on the configuration of Figure 16 is illustrated in Figure 17A and 17B where a set of devices according to the present invention are shown assembled into a rapidly assembled and highly versatile structure which can serve, for example, the underlying structure for a tent, and the like. Preferably, such a device would also include an appropriate tarpaulin or other suitable cloth to close off the open spaces between the rigid structure. The spaces could also be closed by sliding panels along the lines of the embodiment of Figure 4.

Another application of devices according to the present invention is illustrated in Figures 17A, 17B 18A and 18B, which depict various versions of a tripod incorporating devices according to the present invention in the tripod legs. In each case, the device includes a central pole and three legs. For clarity, one of the three legs is omitted in each drawing.

The configurations of Figures 18A and 18B show the closed and open positions of an embodiment which operates along the lines of the embodiment of Figure 1 such that an upward motion leads to the extension of the legs. In Figures 19A and 19B are shown the closed and open positions of a configuration along the lines of Figures 3 and 5 wherein a downward motion is used to extend the legs. In both configurations, it is possible to adjust the length of each leg individually before the leg is locked in position.

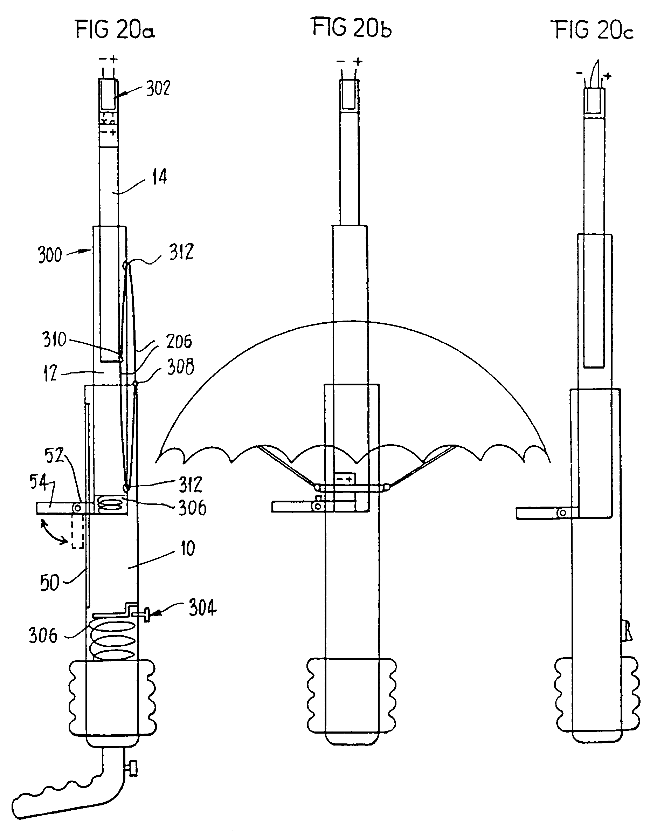

Finally, shown in Figures 20A, 20B and 20C are three applications of devices according to the present invention in the context of electric shockers, such as those which might be used to ward off an attack. Figure 20a shows a walking cane 300 equipped with a shocker 302 which can be placed where desired by use of a release lever 304 and a system of springs 306. Cane 300 comprises a first member 10 and a second member 12, whereby first member 10 is movable relative to second member 12. Second member 12 may comprise a handle element 54 which may be pivotally retractable as in Figure 20a. A rigid connector 52, which connects handle element 54, is attached to a posterior portion of second member 12 and is slidable through longitudinal slot 50, in similar manner as described in correlation to Figure 3. A third member 14 is movable relative to second member 12. The device of Figure 20a further features a single flexible connector 206 mounted in second member 12. Flexible connector 206 is connected to first member 10 at anterior edge 308 and to third member 14 at posterior edge 310. Flexible connector 206 passes through holes 312 in second member 12. It will be appreciated that in the device illustrated in Figure 20a, first member 10 and third member 14 move together in opposite directions, with reference to second member 12, in a manner similar to the above description regarding Figure 8.

Shown in Figure 20b is an umbrella which operates in the same way. Finally, Figure 20c features a stick which, in addition, may feature a knife or similar cutting tool to cut through the attacker's clothes so as to allow better contact of the shocker with the attacker's skin.

## Claims

1. A portable extendible-retractable device adapted to be held by hand and suitable for motion of a tool or other object attached to the device, said device comprising:
(a) a first member (10,200);
(b) a second member (12,202) movable relative to said first member (10,200);
(c) a third member (14,204) movable relative to said first member (10,200) and said second member (12.202);
(d) a flexible connector means (30,32,206) attached to a posterior portion of said third member (14, 204), said flexible connector means (30,32,206) being constrained by and being movable relative to a first location (34) of said second member (12,202), said flexible connector means (30, 32,206) being attached to a first attachment location of said first member (10,200) so that anteriorly-directed motion of said second member (12,202) results in anteriorly-directed motion of said third member (14,204),
characterized in that
(e) said flexible connector means (30,32,206) is constrained by and is movable relative to a second location (36) of said second member (12,202), said second location (36) of said second member (12,202) being posterior of said first location (34) of said second member (12,202), said flexible connector means (30,32,206) being attached to a second attachment location of said first member (10,200) so that posteriorly-directed motion of said second member (12,202) results in posteriorly-directed motion of said third member (14,204).

2. A device as in claim 1, characterized in that said flexible connector means (30,32) comprises a first flexible connector (30) and a second flexible connector (32).

3. A device as in claim 2, characterized in further comprising:
(f) a third flexible connector (16) attached to a posterior portion (36) of said second member (12), said third flexible connector (16) being contrained by and being movable relative to a first location of said first member (10);
(g) a fourth flexible connector (22) attached to a posterior portion (36) of said second member (12), said fourth flexible connector (22) being constrained by and being movable relative to a second location of said first member (10), said second location being posterior of said first location,
said third flexible connector (16) and said fourth flexible connector (22) being coupled to each other through a coupler which includes a handle (28) so that said third flexible connector (16), said fourth flexible connector (22) and said second member (12) all move simultaneously as said coupler (28) is moved axially along said first member (10), said handle (28) further serving in positioning and stabilizing the device.

4. A device as in claim 1, characterized in that said first member (10) is formed with a longitudinal slot (50) and further comprising a rigid connector (52) attached to a posterior portion of said second member (12), said rigid connector (52) being slidable through said longitudinal slot (50) of said first member (10) so that said second member (12) is moved whenever said rigid connector (52) is moved.

5. A device as in claim 1, characterized in that said rigid connector (52) has a handle (54) arranged to be lockable (55) at a fixed location.

6. A device as in claim 1, characterized in that said flexible connector means forms a continuous band (206) or comprise two flexible connectors (30, 32) making a loop.

7. A device as in claim 3, characterized in that said handle (28, 54) is arranged to be lockable (38, 55) at a location on said first member (10).

8. A device as in any one of claims 1 to 7, characterized in that said first member (10), said second member (12) and said third member (14) are nested so that said third member (14) is within said second member (12) and said second member (12) is within said first member (10).

9. A device as in claim 8, characterized in that first member (10), said second member (12) and said third member (14) are approximately cylindrical.

10. A device as in any one of claims 1 to 7, characterized in that said first member (10), said second member (12) and said third member (14) are arranged next to each other.

11. A device as in claim 2, characterized in that said first attachment location and said second attachment location are on opposite sides of said first member (10).

12. A device as in any one of claims 1 to 11, characterized in that said flexible connectors are cables.

13. A device as in any one of claims 1 to 12, characterized in that said first location of said first member is the anterior edge of said first member (10) and said second location of said first member (10) is the posterior edge of said first member (10).

14. A device as in any one of claims 1 to 13, characterized in that said first location of said second member (12) is a first hole in said second member (12) and said second location of said second member (12) is a second hole, posterior of said first hole, through said second member (12).

15. A device as in any one of claim 3 to 14, characterized in that said coupling of said third flexible connector (16) and said fourth flexible connector (22) to each other is achieved through a movable handle (28, 54).

16. A device as in claim 15, characterized in that said movable handle (28, 54) can be immobilized through detachable attachment (38, 55) to said first member (10).

17. A device as in any one of claims 3 to 14, characterized in that said coupling of said third flexible connector (16) and said fourth flexible connector (22) to each other is achieved through a winch mechanism (100).

18. A device as in any preceding claim, characterized in comprising a tool (44) attached to at least one of said members (10, 12, 14).

19. A device as in claim 18, characterized in that said tool (44) is a paint brush, a paint roller, a mop, a dust brush, a cutting tool, tongs, or a fitting capable of attaching the device to another body.

20. A device as in claim 18, characterized in that said tool (44) is capable of being activated remotely by the user.

21. A portable extendible-retractable device adapted to be held by hand and suitable for motion of a tool or other object attached to the device, said device comprising:
(a) a first member (10, 200),
(b) a second member (12, 202) movable relative to said first member (10, 200),
(c) a third member (14, 204) movable relative to said first member (10, 200) and said second member (12, 202), and
(d) a flexible connector means (76, 88, 244), said flexible connector means (76, 88, 244) being constrained by and being movable relative to a first location of said second member (12, 202), said flexible connector means (76, 88, 244) operating a first wheel (78, 242) disposed at said first location of said second member (12, 202) so that anteriorly-directed motion of said second member (12, 202) results in anteriorly-directed motion of said third member (14, 204),
characterized in that
(e) said flexible connector means (76, 88, 244) is constrained by and is movable relative to a second location of said second member (12, 208), said flexible connector means (76, 88, 244) operating a second wheel (84, 240) disposed at said second location of said second member (12, 202), said second location of said second member (12, 202) being posterior of said first location of said second member (12, 202), and
in that said first wheel (78, 242) engages said third member (14, 204) and said second wheel (84, 240) engages said first member (10, 200) so that posteriorly-directed motion of said second member (12, 202) results in posteriorly-directed motion of said third member (14, 204).

22. A device as in claim 21, characterized in that said flexible connector means (244) is mounted at said second member (202), said flexible connector means (244) being connected to said first member (200) and to said third member (204) such that said first and third members (200, 204) move in opposite directions relative to said second member (202).

23. A device as in claim 21 or 22, characterized in that said motion of said first and third members (200, 204) is provided when said first and second members (200, 202) are moved relative to one another.

24. A device as any of claims 21 to 23, characterized in that said motion of said first and third members (200, 204) is provided when said second and third members (202, 204) are moved relative to one another.

25. A device as in claim 1 or 21, characterized in that at least one of said first and third members (200, 204) is formed of at least two portions (210, 212), one of said portions being permanently attached to said flexible connector means (206) and at least another one of said portions being detachable.

26. A device as in claim 21, characterized in that
said first member (10) is formed with a longitudinal slot (50) and has a first member rack (86),
said second member (12) has an anterior end and a posterior end, said second member (12) having a first pinion (78) near said anterior end and a second pinion (84) near said posterior end, said second pinion (84) engaged to said first member rack (86),
a rigid connector member (52) is attached to a posterior portion of said second member (12), said rigid connector (52) being slidable through said longitudinal slot (50) of said first member (10) so that said second member (12) is moved whenever said rigid connector (50) is moved, and
said third member (14) has a third member rack (82) engaged to said first pinion (78), said first pinion (78) being rotatable by a cable connector (76) attached to said first member (10) so that anteriorly-directed motion of said second member (12) results in anteriorly-directed motion of said third member (14), said third member (14) being attached to said second member pinion (84) so that posteriorly-directed motion of said second member (18) results in posteriorly-directed motion of said third member (14).

27. A device as in claim 21, characterized in further comprising sensor means for sensing the position of at least one of the first and second members (10, 12) relative to said second member (14).

28. A device as in claim 21, characterized in that
said first member (200) has a first rack (224),
said third member (204) has a second rack (224), and
a pair of toothed wheels (240, 242) are mounted onto said second member (202), said toothed wheels (240, 242) being connected to each other through said flexible connector (244), said flexible connector (244) comprising a continuous band or a loop made of two flexible connectors, said toothed wheels (240, 242) engaging said first and said second racks (224) such that said first and third members (200, 204) move in opposite directions relative to said second member (202).

29. A device as any one of claims 21 to 28, characterized in that each of said first member (200), second member (202) or third member (204) may be attached to an object.

30. A device as anyone of claims 21 to 29, characterized in that a reducibly expandable member (250) may be simultaneously attached to any two of said first member (200), second member (202) or third member (204), correspondingly.

31. A device as in claim 30, characterized in that said reducibly expandable member comprises a hollow tube (250).

32. A device as in claim 1 or 21, characterized in that it contains a spring (306) to influence the movement of the members.

## Patentansprüche

1. Tragbare aus-/einfahrbare Vorrichtung, die dafür ausgebildet ist, in der Hand gehalten zu werden, und geeignet ist zur Bewegung eines an der Vorrichtung befestigten Werkzeuges oder anderen Objekts, wobei die Vorrichtung aufweist:
(a) ein erstes Teil (10, 200);
(b) ein zweites Teil (12, 202), das relativ zu dem ersten Teil (10, 200) bewegbar ist;
(c) ein drittes Teil (14, 204), das relativ zu dem ersten Teil (10, 200) und zu dem zweiten Teil (12, 202) bewegbar ist;
(d) eine flexible Verbindereinrichtung (30, 32, 206), die an einem hinteren Teil des dritten Teils (14, 204) befestigt ist, wobei dieflexible Verbindereinrichtung (30, 32, 206) durch eine erste Stelle (34) des zweiten Teils (12, 202) gehalten und relativ zu derselben bewegbar ist, wobei die flexible Verbindereinrichtung (30, 32, 206) an einer ersten Befestigungsstelle des ersten Teils (10, 200) befestigt ist, so daß eine nach vorn gerichtete Bewegung des zweiten Teils (12, 202) zu einer nach vorn gerichteten Bewegung des dritten Teils (14, 204) führt,
dadurch gekennzeichnet, daß
(e) die flexible Verbindereinrichtung (30, 32, 206) durch eine zweite Stelle (36) des zweiten Teils (12, 202) gehalten ist und relativ zu derselben bewegbar ist, wobei die zweite Stelle (36) des zweiten Teils (12, 202) hinter der ersten Stelle (34) des zweiten Teils (12, 202) ist, wobei die flexible Verbindereinrichtung (30, 32, 206) an einer zweiten Befestigungsstelle des ersten Teils (10, 200) befestigt ist, so daß eine nach hinten gerichtete Bewegung des zweiten Teils (12, 202) zu einer nach hinten gerichteten Bewegung des dritten Teils (14, 204) führt.

2. Vorrichtung nach Anspruch 1, dadurch gekennzeichnet, daß die flexible Verbindereinrichtung (30, 32) einen ersten flexiblen Verbinder (30) und einen zweiten flexiblen Verbinder (32) aufweist.

3. Vorrichtung nach Anspruch 2, dadurch gekennzeichnet, daß sie weiter aufweist:
(f) einen dritten flexiblen Verbinder (16), der an einem hinteren Teil (36) des zweiten Teils (12) befestigt ist, wobei der dritte flexible Verbinder (16) durch eine erste Stelle des ersten Teils (10) gehalten ist und relativ zu derselben bewegbar ist;
(g) einen vierten flexiblen Verbinder (22), der an einem hinteren Teil (36) des zweiten Teils (12) befestigt ist, wobei der vierte flexible Verbinder (22) durch eine zweite Stelle des ersten Teils (10) gehalten ist und relativ zu derselben bewegbar ist, wobei die zweite Stelle hinter der ersten Stelle ist,
wobei der dritte flexible Verbinder (16) und der vierte flexible Verbinder (22) durch einen Koppler miteinander gekoppelt sind, der einen Handgriff (28) aufweist, so daß der dritte flexible Verbinder (16), der vierte flexible Verbinder (22) und das zweite Teil (12) sich alle gleichzeitig bewegen, wenn der Koppler (28) axial längs des ersten Teils (10) bewegt wird, wobei der Handgriff (28) weiter dazu dient, die Vorrichtung zu positionieren und zu stabilisieren.

4. Vorrichtung nach Anspruch 1, dadurch gekennzeichnet, daß das erste Teil (10) mit einem Längsschlitz (50) versehen ist und weiter einen starren Verbinder (52) aufweist, der an einem hinteren Teil des zweiten Teils (12) befestigt ist, wobei der starre Verbinder (52) in dem Längsschlitz (50) des ersten Teils (10) verschiebbar ist, so daß das zweite Teil (12) immer dann bewegt wird, wenn der starre Verbinder (52) bewegt wird.

5. Vorrichtung nach Anspruch 1, dadurch gekennzeichnet, daß der starre Verbinder (52) einen Handgriff (54) hat, der so angeordnet ist, daß er an einer festen Stelle (55) verriegelbar ist.

6. Vorrichtung nach Anspruch 1, dadurch gekennzeichnet, daß die flexible Verbindereinrichtung ein durchgehendes Band (206) bildet oder zwei flexible Verbinder (30, 32) aufweist, die eine Schleife bilden.

7. Vorrichtung nach Anspruch 3, dadurch gekennzeichnet, daß der Handgriff (28, 54) so angeordnet ist, daß er an einer Stelle (38, 55) an dem ersten Teil (10) verriegelbar ist.

8. Vorrichtung nach einem der Ansprüche 1 bis 7, dadurch gekennzeichnet, daß das erste Teil (10), das zweite Teil (12) und das dritte Teil (14) ineinander geschachtelt sind, so daß das dritte Teil (14) innerhalb des zweiten Teils (12) und das zweite Teil (12) innerhalb des ersten Teils (10) ist.

9. Vorrichtung nach Anspruch 8, dadurch gekennzeichnet, daß das erste Teil (10), das zweite Teil (12) und das dritte Teil (14) ungefähr zylindrisch sind.

10. Vorrichtung nach einem der Ansprüche 1 bis 7, dadurch gekennzeichnet, daß das erste Teil (10), das zweite Teil (12) und das dritte Teil (14) benachbart zueinander angeordnet sind.

11. Vorrichtung nach Anspruch 2, dadurch gekennzeichnet, daß die erste Befestigungsstelle und die zweite Befestigungsstelle auf entgegengesetzten Seiten des ersten Teils (10) sind.

12. Vorrichtung nach einem der Ansprüche 1 bis 11, dadurch gekennzeichnet, daß die flexiblen Verbinder Seile sind.

13. Vorrichtung nach einem der Ansprüche 1 bis 12, dadurch gekennzeichnet, daß die erste Stelle des ersten Teils der vordere Rand des ersten Teils (10) ist und daß die zweite Stelle des ersten Teils (10) der hintere Rand des ersten Teils (10) ist.

14. Vorrichtung nach einem der Ansprüche 1 bis 13, dadurch gekennzeichnet, daß die erste Stelle des zweiten Teils (12) ein erstes Loch in dem zweiten Teil (12) ist und daß die zweite Stelle des zweiten Teils (12) ein zweites Loch ist, das sich hinter dem ersten Loch befindet und sich durch das zweite Teil (12) erstreckt.

15. Vorrichtung nach einem der Ansprüche 3 bis 14, dadurch gekennzeichnet, daß das Koppeln des dritten flexiblen Verbinders (16) und des vierten flexiblen Verbinders (22) mit einander durch einen beweglichen Handgriff (28, 54) erreicht wird.

16. Vorrichtung nach Anspruch 15, dadurch gekennzeichnet, daß der bewegliche Handgriff (28, 54) durch eine lösbare Befestigung (38, 55) an dem ersten Teil (10) stillgesetzt werden kann.

17. Vorrichtung nach einem der Ansprüche 3 bis 14, dadurch gekennzeichnet, daß das Koppeln des dritten flexiblen Verbinders (16) und des vierten flexiblen Verbinders (22) mit einander durch einen Windenmechanismus (100) erreicht wird.

18. Vorrichtung nach irgendeinem vorhergehenden Anspruch, dadurch gekennzeichnet, daß sie ein Werkzeug (44) aufweist, das an wenigstens einem der Teile (10, 12, 14) befestigt ist.

19. Vorrichtung nach Anspruch 18, dadurch gekennzeichnet, daß das Werkzeug (44) ein Malerpinsel, eine Farbwalze, ein Mop, eine Staubbürste, ein Schneidwerkzeug, eine Zange oder eine Befestigungsvorrichtung zum Befestigen der Vorrichtung an einem anderen Körper ist.

20. Vorrichtung nach Anspruch 18, dadurch gekennzeichnet, daß das Werkzeug (44) dafür ausgebildet ist, durch den Benutzer fernbetätigt zu werden.

21. Tragbare aus-/einfahrbare Vorrichtung, die dafür ausgebildet ist, in der Hand gehalten zu werden und geeignet ist zur Bewegung eines Werkzeuges oder anderen Objekts, das an der Vorrichtung befestigt ist, wobei die Vorrichtung aufweist:
(a) ein erstes Teil (10, 200),
(b) ein zweites Teil (12, 202), das relativ zu dem ersten Teil (10, 200) bewegbar ist,
(c) ein drittes Teil (14, 204), das relativ zu dem ersten Teil (10, 200) und zu dem zweiten Teil (12, 202) bewegbar ist, und
(d) eine flexible Verbindereinrichtung (75, 88, 244), die durch eine erste Stelle des zweiten Teils (12, 202) gehalten ist und relativ zu derselben bewegbar ist, wobei die flexible Verbindereinrichtung (76, 88, 244) ein erstes Rad (78, 242) betätigt, das an der ersten Stelle des zweiten Teils (12, 202) angeordnet ist, so daß eine nach vorn gerichtete Bewegung des zweiten Teils (12, 202) zu einer nach vorn gerichteten Bewegung des dritten Teils (14, 204) führt,
dadurch gekennzeichnet, daß
(e) die flexible Verbindereinrichtung (76, 88, 244) durch eine zweite Stelle des zweiten Teils (12, 208) gehalten ist und relativ zu derselben bewegbar ist, wobei die zweite flexible Verbindereinrichtung (76, 88, 244) ein zweites Rad (84, 240) betätigt, das an der zweiten Stelle des zweiten Teils (12, 202) angeordnet ist, und wobei die zweite Stelle des zweiten Teils (12, 202) hinter der ersten Stelle des zweiten Teils (12, 202) ist, und
daß das erste Rad (78, 242) das dritte Teil (14, 204) erfaßt und daß das zweite Rad (84, 240) das erste Teil (10, 200) erfaßt, so daß eine nach hinten gerichtete Bewegung des zweiten Teils (12, 202) zu einer nach hinten gerichteten Bewegung des dritten Teils (14, 204) führt.

22. Vorrichtung nach Anspruch 21, dadurch gekennzeichnet, daß die flexible Verbindereinrichtung (244) an dem zweiten Teil (202) befestigt ist, wobei die flexible Verbindereinrichtung (244) mit dem ersten Teil (200) und mit dem dritten Teil (204) verbunden ist, so daß sich das erste und das dritte Teil (200, 204) in entgegengesetzten Richtungen relativ zu dem zweiten Teil (202) bewegen.

23. Vorrichtung nach Anspruch 21 oder 22, dadurch gekennzeichnet, daß die Bewegung des ersten und des dritten Teils (200, 204) erzeugt wird, wenn das erste und das zweite Teil (200, 202) relativ zu einander bewegt werden.

24. Vorrichtung nach einem der Ansprüche 21 bis 23, dadurch gekennzeichnet, daß die Bewegung des ersten und des dritten Teils (200, 204) erzeugt wird, wenn das zweite und das dritte Teil (202, 204) relativ zu einander bewegt werden.

25. Vorrichtung nach Anspruch 1 oder 21, dadurch gekennzeichnet, daß wenigstens das erste oder das dritte Teil (200, 204) aus wenigstens zwei Teilen (210, 212) gebildet ist, wobei einer der Teile an der flexiblen Verbindereinrichtung (206) dauerhaft befestigt ist und wobei wenigstens ein anderer Teil lösbar ist.

26. Vorrichtung nach Anspruch 21, dadurch gekennzeichnet,
daß das erste Teil (10) mit einem Längsschlitz (50) versehen ist und eine erste Zahnstange (86) hat,
das zweite Teil (12) ein vorderes Ende und ein hinteres Ende hat, wobei das zweite Teil (12) ein erstes Ritzel (78) nahe dem vorderen Ende und ein zweites Ritzel (84) nahe dem hinteren Ende hat und wobei das zweite Ritzel (84) mit der ersten Zahnstange (86) in Eingriff ist,
daß ein starres Verbindungsteil (52) an einem hinteren Teil des zweiten Teils (12) befestigt ist, wobei der starre Verbinder (52) in dem Längsschlitz (50) des ersten Teils (10) so verschiebbar ist, daß das zweite Teil (12) immer dann bewegt wird, wenn der starre Verbinder (50) bewegt wird, und
daß das dritte Teil (14) eine dritte Zahnstange (82) hat, die mit dem ersten Ritzel (78) in Eingriff ist, wobei das erste Ritzel (78) durch einen Seilverbinder (76) drehbar ist, der an dem ersten Teil (10) befestigt ist, so daß eine nach vom gerichtete Bewegung des zweiten Teils (12) zu einer nach vom gerichteten Bewegung des dritten Teils (14) führt, und wobei das dritte Teil (14) an dem Ritzel (84) des zweiten Teils befestigt ist, so daß eine nach vorn gerichtete Bewegung des zweiten Teils (18) zu einer nach vorn gerichteten Bewegung des dritten Teils (14) führt.

27. Vorrichtung nach Anspruch 21, gekennzeichnet weiter durch eine Sensoreinrichtung zum Erfassen der Position von wenigstens einem der ersten und zweiten Teile (10, 12) relativ zu dem zweiten Teil (14).

28. Vorrichtung nach Anspruch 21, dadurch gekennzeichnet, daß
das erste Teil (200) eine erste Zahnstange (224) hat,
das dritte Teil (204) eine zweite Zahnstange (224) hat und
ein Paar Zahnräder (240, 242) auf dem zweiten Teil (202) befestigt ist, wobei die Zahnräder (240, 242) mit einander durch den flexiblen Verbinder (244) verbunden sind, wobei der flexible Verbinder (244) ein durchgehendes Band oder eine Schleife, die aus zwei flexiblen Verbindern hergestellt ist, aufweist, und wobei die Zahnräder (240, 242) die erste und die zweite Zahnstange (224) erfassen, so daß das erste und das dritte Teil (200, 204) sich in entgegengesetzten Richtungen relativ zu dem zweiten Teil (202) bewegen.

29. Vorrichtung nach einem der Ansprüche 21 bis 28, dadurch gekennzeichnet, daß das erste Teil (200), das zweite Teil (202) oder das dritte Teil (204) jeweils an einem Objekt befestigt sind.

30. Vorrichtung nach einem der Ansprüche 21 bis 29, dadurch gekennzeichnet, daß ein reduzierbar aufweitbares Teil (250) gleichzeitig an zwei unter dem ersten Teil (200), dem zweiten Teil (202) oder dem dritten Teil (204) ausgewählten Teilen entsprechend befestigt sein kann.

31. Vorrichtung nach Anspruch 30, dadurch gekennzeichnet, daß das reduzierbar aufweitbare Teil ein hohles Rohr (250) aufweist.

32. Vorrichtung nach Anspruch 1 oder 21, dadurch gekennzeichnet, daß sie eine Feder (306) enthält, um die Bewegung der Teile zu beeinflussen.

## Revendications

1. Dispositif portable extensible-rétractable conçu pour être tenu en mains et approprié pour déplacer un ustensile ou un autre objet fixé au dispositif, ledit dispositif comprenant:
(a) un premier élément (10, 200);
(b) un deuxième élément (12, 202) mobile par rapport audit premier élément (10, 200);
(c) un troisième élément (14, 204) mobile par rapport audit premier élément (10, 200) et par rapport audit deuxième élément (12, 202); et
(d) un moyen de raccord flexible (30, 32, 206) fixé à une portion arrière dudit troisième élément (14, 204), ledit moyen de raccord flexible (30, 32, 206) étant commandé par et étant mobile par rapport à un premier endroit (34) dudit deuxième élément (12, 202), ledit moyen de raccord flexible (30, 32, 206) étant fixé à un premier endroit de fixation dudit premier élément (10, 200) de telle sorte que le mouvement dirigé vers l'avant dudit deuxième élément (12, 202) déclenche le mouvement dirigé vers l'avant dudit troisième élément (14, 204),
caractérisé en ce que
(e) ledit moyen de raccord flexible (30, 32, 206) est commandé par et est mobile par rapport à un deuxième endroit (36) dudit deuxième élément (12, 202), ledit deuxième endroit (36) dudit deuxième élément (12, 202) étant situé à l'arrière dudit premier endroit (34) dudit deuxième élément (12, 202), ledit moyen de raccord flexible (30, 32, 206) étant fixé à un deuxième endroit de fixation dudit premier élément (10, 200), si bien que le mouvement dirigé vers l'arrière dudit deuxième élément (12, 202) déclenche le mouvement dirigé vers l'arrière dudit troisième élément (14, 204).

2. Dispositif selon la revendication 1, caractérisé en ce que ledit moyen de raccord flexible (30, 32) comprend un premier raccord flexible (30) et un deuxième raccord flexible (32).

3. Dispositif selon la revendication 2, caractérisé en ce qu'il comprend en outre:
(f) un troisième raccord flexible (16) fixé à une portion arrière (36) dudit deuxième élément (12), ledit troisième raccord flexible (16) étant commandé par et étant mobile par rapport à un premier endroit dudit premier élément (10);
(g) un quatrième raccord flexible (22) fixé à une portion arrière (36) dudit deuxième élément (12), ledit quatrième raccord flexible (22) étant commandé par et étant mobile par rapport à un deuxième endroit dudit premier élément (10), ledit deuxième élément étant situé à l'arrière dudit premier endroit,
ledit troisième raccord flexible (16) et ledit quatrième raccord flexible (22) étant couplés l'un a l'autre via un dispositif d'accouplement qui englobe une poignée (28) de telle sorte que ledit troisième raccord flexible (16), ledit quatrième raccord flexible (22) et ledit deuxième élément (12) sont tous mis en mouvement de manière simultanée lorsque ledit dispositif d'accouplement (28) se déplace en direction axiale le long dudit premier élément (10), ladite poignée (28) servant en outre à positionner et à stabiliser le dispositif.

4. Dispositif selon la revendication 1, caractérisé en ce que ledit premier élément (10) est muni d'une fente longitudinale (50) et comprend en outre un raccord rigide (52) fixé à une portion arrière dudit deuxième élément (12), ledit raccord rigide (52) étant à même de s'insérer par glissement à travers ladite fente longitudinale (50) dudit premier élément (10), si bien que ledit deuxième élément (12) est mis en mouvement chaque fois que ledit raccord rigide (52) est mis en mouvement.

5. Dispositif selon la revendication 1, caractérisé en ce que ledit raccord rigide (52) possède une poignée (54) arrangée pour pouvoir être verrouillée (55) à un endroit fixe.

6. Dispositif selon la revendication 1, caractérisé en ce que ledit moyen de raccord flexible forme un ruban continu (206) ou comprend deux raccords flexibles (30, 32) formant une boucle.

7. Dispositif selon la revendication 3, caractérisé en ce que ladite poignée (28, 54) est arrangée pour pouvoir être verrouillée (38, 55) à un endroit sur ledit premier élément (10).

8. Dispositif selon l'une quelconque des revendications 1 à 7, caractérisé en ce que ledit premier élément (10), ledit deuxième élément (12) et ledit troisième élément (14) sont emboîtés de telle sorte que ledit troisième élément (14) est disposé à l'intérieur dudit deuxième élément (12) et ledit deuxième élément (12) est disposé à l'intérieur dudit premier élément (10).

9. Dispositif selon la revendication 8, caractérisé en ce que ledit premier élément (10), ledit deuxième élément (12) et ledit troisième élément (14) sont de forme approximativement cylindrique.

10. Dispositif selon l'une quelconque des revendications 1 à 7, caractérisé en ce que ledit premier élément (10), ledit deuxième élément (12) et ledit troisième élément (14) sont disposés les uns à côté des autres.

11. Dispositif selon la revendication 2, caractérisé en ce que ledit premier endroit de fixation et ledit deuxième endroit de fixation sont disposés de part et d'autre dudit premier élément (10).

12. Dispositif selon l'une quelconque des revendications 1 à 11, caractérisé en ce que lesdits raccords flexibles sont des câbles.

13. Dispositif selon l'une quelconque des revendications 1 à 12, caractérisé en ce que ledit premier endroit dudit premier élément représente le bord avant dudit premier élément (10) et ledit deuxième endroit dudit premier élément (10) représente le bord arrière dudit premier élément (10).

14. Dispositif selon l'une quelconque des revendications 1 à 13, caractérisé en ce que ledit premier endroit dudit deuxième élément (12) est un premier trou pratiqué dans ledit deuxième élément (12) et ledit deuxième endroit dudit deuxième élément (12) représente un deuxième trou, situé à l'arrière dudit premier trou, pratiqué à travers ledit deuxième élément (12).

15. Dispositif selon l'une quelconque des revendications 3 à 14, caractérisé en ce que ledit accouplement dudit troisième raccord flexible (16) et dudit quatrième raccord flexible (22) l'un à l'autre est réalisé via une poignée mobile (28, 54).

16. Dispositif selon la revendication 15, caractérisé en ce que ladite poignée mobile (28, 54) peut être immobilisée via une fixation amovible (38, 55) audit premier élément (10).

17. Dispositif selon l'une quelconque des revendications 3 à 14, caractérisé en ce que ledit accouplement dudit troisième raccord flexible (16) et dudit quatrième raccord flexible (22) l'un à l'autre est réalisé via un mécanisme de manivelle (100).

18. Dispositif selon l'une quelconque des revendications précédentes, caractérisé en ce qu'il comprend un ustensile (44) fixé à au moins un desdits éléments (10, 12, 14).

19. Dispositif selon la revendication 18, caractérisé en ce que ledit ustensile (44) est un pinceau, un rouleau à peindre, une éponge, une époussette, un outil de coupe, des languettes ou un accessoire permettant de fixer le dispositif à un autre corps.

20. Dispositif selon la revendication 18, caractérisé en ce que ledit ustensile (44) peut être activé à distance par l'utilisateur.

21. Dispositif portable extensible-rétractable conçu pour être tenu en mains et approprié pour déplacer un ustensile ou un autre objet fixé au dispositif, ledit dispositif comprenant:
(a) un premier élément (10, 200);
(b) un deuxième élément (12, 202) mobile par rapport audit premier élément (10, 200);
(c) un troisième élément (14, 204) mobile par rapport audit premier élément (10, 200) et par rapport audit deuxième élément (12, 202); et
(d) un moyen de raccord flexible (76, 88, 244), ledit moyen de raccord flexible (76, 88, 244) étant commandé par et étant mobile par rapport à un premier endroit dudit deuxième élément (12, 202), ledit moyen de raccord flexible (76, 88, 244) entraînant une première roue (78, 242) disposée audit premier endroit dudit deuxième élément (12, 202) de telle sorte que le mouvement dirigé vers l'avant dudit deuxième élément (12, 202) déclenche le mouvement dirigé vers l'avant dudit troisième élément (14, 204),
caractérisé en ce que
(e) ledit moyen de raccord flexible (76, 88, 244) est commandé par et est mobile par rapport à un deuxième endroit dudit deuxième élément (12, 202), ledit moyen de raccord flexible (76, 88, 244) entraînant une deuxième roue (84, 240) disposée audit deuxième endroit dudit deuxième élément (12, 202), ledit deuxième endroit dudit deuxième élément (12, 202) étant situé à l'arrière dudit premier endroit dudit deuxième élément (12, 202), et
en ce que ladite première roue (78, 242) entre en contact avec ledit troisième élément (14, 204) et ladite deuxième roue (84, 240) entre en contact avec ledit premier élément (10, 200), si bien que le mouvement dirigé vers l'arrière dudit deuxième élément (12, 202) déclenche le mouvement dirigé vers l'arrière dudit troisième élément (14, 204).

22. Dispositif selon la revendication 21, caractérisé en ce que ledit moyen de raccord flexible (244) est monté sur ledit deuxième élément (202), ledit moyen de raccord flexible (244) étant relié audit premier élément (200) et audit troisième élément (204), si bien que lesdits premier et troisième éléments (200, 204) se déplacent dans des directions opposées par rapport audit deuxième élément (202).

23. Dispositif selon la revendication 21 ou 22, caractérisé en ce qu'on obtient ledit mouvement desdits premier et troisième éléments (200, 204) lorsque lesdits premier et deuxième éléments (200, 202) se déplacent l'un par rapport à l'autre.

24. Dispositif selon l'une quelconque des revendications 21 à 23, caractérisé en ce qu'on obtient ledit mouvement desdits premier et troisième éléments (202, 204) lorsque lesdits deuxième et troisième éléments (202, 204) se déplacent l'un par rapport à l'autre.

25. Dispositif selon la revendication 1 ou 21, caractérisé en ce qu'au moins ledit premier élément (202) ou au moins ledit troisième élément (204) est constitué par au moins deux portions (210, 212), une desdites portions étant fixée à demeure audit moyen de raccord flexible (206) et au moins une autre desdites portions étant amovible.

26. Dispositif selon la revendication 21, caractérisé en ce que
ledit premier élément (10) est muni d'une fente longitudinale (50) et possède une crémaillère (86) du premier élément,
ledit deuxième élément (12) possède une extrémité avant et une extrémité arrière, ledit deuxième élément (12) possédant un premier pignon à proximité de ladite extrémité avant et un deuxième pignon (84) à proximité de ladite extrémité arrière, ledit deuxième pignon (84) venant s'engrener dans ladite crémaillère (86) du premier élément,
un élément de raccord rigide (52) est fixé à une portion arrière dudit deuxième élément (12), ledit raccord rigide (52) étant à même de s'insérer par glissement à travers ladite fente longitudinale (50) dudit premier élément (10), si bien que ledit deuxième élément (12) est mis en mouvement chaque fois que ledit raccord rigide (50) est mis en mouvement, et
ledit troisième élément (14) possède une crémaillère (82) du troisième élément, engrenée avec ledit premier pignon (78), ledit premier pignon (78) étant mis en rotation via un raccord à câble (76) fixé audit premier élément (10), si bien que le mouvement dirigé vers l'avant dudit deuxième élément (12) déclenche le mouvement dirigé vers l'avant dudit troisième élément (14), ledit troisième élément (14) étant fixé audit pignon (84) du deuxième élément, si bien que le mouvement dirigé vers l'arrière dudit deuxième élément (18) déclenche le mouvement dirigé vers l'arrière dudit troisième élément (14).

27. Dispositif selon la revendication 21, caractérisé en ce qu'il comprend en outre un capteur pour détecter la position d'au moins un élément parmi les premier et deuxième éléments (10, 12) par rapport audit troisième élément (14).

28. Dispositif selon la revendication 21, caractérisé en ce que
ledit premier élément (200) possède une première crémaillère (224),
ledit troisième élément (204) possède une deuxième crémaillère (224), et
une paire de roues dentées (240, 242) sont montées sur ledit deuxième élément (202), lesdites roues dentées (240, 242) étant reliées l'une à l'autre via ledit raccord flexible (244), ledit raccord flexible (244) comprenant un ruban continu ou une boucle constituée par deux raccords flexibles, lesdites roues dentées (240, 242) entrant en contact avec lesdites première et deuxième crémaillères (224) de telle sorte que lesdits premier et troisième éléments (202, 204) se déplacent dans des directions opposées par rapport audit deuxième élément (202).

29. Dispositif selon l'une quelconque des revendications 21 à 28, caractérisé en ce que ledit premier élément (200), le deuxième élément (202) ou le troisième élément (204) peuvent être fixés respectivement à un objet.

30. Dispositif selon l'une quelconque des revendications 21 à 29, caractérisé en ce qu'un élément réductible-extensible (250) peut être fixé de manière simultanée à deux éléments quels qu'ils soient choisis parmi ledit premier élément (200), ledit deuxième élément (202) ou ledit troisième élément (204), de manière correspondante.

31. Dispositif selon la revendication 30, caractérisé en ce que ledit élément réductible-extensible comprend un tube creux (250).

32. Dispositif selon la revendication 1 ou 21, caractérisé en ce qu'il contient un ressort (306) pour influencer le mouvement des éléments.
